(19) Europäisches Patentamt
European Patent Office
Office européen des brevets

(11) Veröffentlichungsnummer: **0 117 503**
**B1**

# (12) EUROPÄISCHE PATENTSCHRIFT

(45) Veröffentlichungstag der Patentschrift: **13.05.87**

(51) Int. Cl.[4]: **C 08 G 77/08**

(21) Anmeldenummer: **84101766.8**

(22) Anmeldetag: **21.02.84**

## (54) Verfahren zum Stabilisieren von Organopolysiloxanen.

(30) Priorität: **23.02.83 DE 3306295**

(43) Veröffentlichungstag der Anmeldung: **05.09.84 Patentblatt 84/36**

(45) Bekanntmachung des Hinweises auf die Patenterteilung: **13.05.87 Patentblatt 87/20**

(84) Benannte Vertragsstaaten: **BE DE FR GB NL**

(56) Entgegenhaltungen:
**DE - A - 2 538 818**
**DE - B - 2 322 312**

(73) Patentinhaber: **WACKER-CHEMIE GMBH, Prinzregentenstrasse 22, D-8000 München 22 (DE)**

(72) Erfinder: **Huber, Peter, Dr. Dipl.-Chem., Gluckstrasse 39, D-8263 Burghausen (DE)**
Erfinder: **Kaufmann, Rudolf, Dr. Dipl.-Chem., Wackerstrasse 5, D-8263 Burghausen (DE)**
Erfinder: **Burkhardt, Jürgen, Dr. Dipl.-Chem., Isenbreite 25, D-8261 Winhöring (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Beispielsweise aus US 4 203 913, ausgegeben 20. Mai 1980, J. Burkhardt et al., Wacker-Chemie GmbH, ist es bekannt, Organopolysiloxane, die durch Kondensation und/oder Äquilibrierung von Organosiliciumverbindungen, die Si-gebundenen Sauerstoff enthalten, mit Phosphornitridchloriden, also Verbindungen, die häufig auch als «Phosphornitrilchloride» bezeichnet werden, als die Kondensation und/oder Äquilibrierung fördernden Katalysatoren erhalten worden sind und somit vor dem Stabilisieren Phosphornitridchloride bzw. deren die Kondensation oder Äquilibrierung von Organosiloxanen fördernde Umsetzungsprodukte mit Organopolysiloxan enthalten, mit basischen Stickstoffverbindungen zu vermischen, um durch Umsetzung dieser basischen Stickstoffverbindungen mit den genannten Phosphorverbindungen diese Organopolysiloxane gegenüber Viskositätsänderungen zu stabilisieren.

Es ist Aufgabe der Erfindung, Organopolysiloxane, welche die genannten Phosphorverbindungen enthalten, gegenüber Viskositätsänderungen zu stabilisieren, wobei die stabilisierten Organopolysiloxane auch bei Temperaturen über 150° C längere Zeit farblos bleiben, beim Lagern klar bleiben, besonders gute elektrische Eigenschaften, wie niedrige Leitfähigkeit und hohe Durchschlagsfestigkeit haben und besonders wenig korrodierend auf Metalle wirken.

Diese Aufgabe wird durch die Erfindung gelöst.

Gegenstand der Erfindung ist ein Verfahren zum Stabilisieren von vor dem Stabilisieren Phosphornitridchloride bzw. deren die Kondensation oder Äquilibrierung oder die Kondensation und Äquilibrierung von Organopolysiloxanen fördernde Umsetzungsprodukte enthaltenden Organopolysiloxanen gegenüber Viskositätsänderungen durch Umsetzung der genannten Phosphorverbindungen mit anderen Verbindungen, dadurch gekennzeichnet, dass die genannten Phosphorverbindungen mit mindestens einer mindestens eine Epoxygruppe je Molekül enthaltenden Verbindung umgesetzt werden.

Die Organopolysiloxane, die erfindungsgemäss gegenüber Viskositätsänderungen stabilisiert werden, sind vorzugsweise solche der allgemeinen Formel

$$AO(SiR_2O)_mA.$$

In dieser Formel bedeutet R gleiche oder verschiedene, einwertige, gegebenenfalls substituierte Kohlenwasserstoffreste oder Wasserstoff mit der Massgabe, dass an jedes Siliciumatom, an das Wasserstoff gebunden ist, auch ein Kohlenwasserstoffrest gebunden ist, A Wasserstoff oder einen Rest der Formel $-SiR_3'$, wobei R' die gleiche Bedeutung wie R hat oder ein einwertiger, über Sauerstoff an das Siliciumatom gebundener, gegebenenfalls substituierter Kohlenwasserstoffrest ist, und m ist eine ganze Zahl im Wert von mindestens 50.

Obwohl durch derartige, häufig verwendete Formeln nicht dargestellt, können bis zu 5 Molprozent der Diorganosiloxaneinheiten durch andere, meist jedoch nur als mehr oder weniger schwer vermeidbare Verunreinigungen vorliegende Siloxaneinheiten, wie Monoorgan- oder $SiO_{4/2}$-Einheiten oder Monoorgano- und $SiO_{4/2}$-Einheiten, ersetzt sein.

Beispiele für einwertige Kohlenwasserstoffreste R oder für SiC- gebundene Kohlenwasserstoffreste in den erfindungsgemäss zu stabilisierenden Organopolysiloxanen sind Alkylreste, wie der Methyl-, Ethyl-, n-Propyl-, Isopropyl-, n-Butyl- und sec.-Butylrest; Alkarylreste, wie der Vinyl- und Allylrest; und Arylreste, wie der Phenylrest.

Beispiele für einwertige, substituierte Kohlenwasserstoffreste R oder für SiC-gebundene, substituierte Kohlenwasserstoffreste in den erfindungsgemäss zu stabilisierenden Organopolysiloxanen sind Cyanalkylreste, wie der beta-Cyanethylrest; Halogenalkylreste, wie der 3,3,3-Trifluorpropylrest; und Halogenarylreste, wie o-, m- und p-Chlorphenylreste.

Wegen der leichteren Zugänglichkeit sind vorzugsweise mindestens 50% der Anzahl der R Methylreste. Die gegebenenfalls vorliegenden übrigen R sind vorzugsweise Vinyl- oder Phenylreste oder Vinyl- und Phenylreste oder Wasserstoff.

Beispiele für über Sauerstoff an das Silicium gebundene substituierte bzw. unsubstituierte Kohlenwasserstoffreste R' sind der Methoxy-, Ethoxy- und der Methoxyethylenoxyrest ($CH_3OCH_2CH_2O-$).

Die Viskosität, gegenüber deren Änderung die Organopolysiloxane erfindungsgemäss stabilisiert werden können, beträgt meist $10^3$ bis $5 \cdot 10^7$ mPa·s bei 25° C.

Die grösste Bedeutung hat das erfindungsgemässe Verfahren für solche Organopolysiloxane der oben angegebenen Formel, worin A Wasserstoff oder einen Rest der Formel $-SiR_3$, wie den Trimethylsilyl- oder Dimethylvinylsilylrest, oder ein Teil der A Wasserstoff und ein Teil der A einen Rest der Formel $-SiR_3$ bedeutet.

Es können Gemische aus verschiedenen Organopolysiloxanen stabilisiert werden.

Bei den Phosphornitridchloriden, welche die Organopolysiloxane, die erfindungsgemäss gegenüber Viskositätsänderungen stabilisiert werden, enthalten, kann es sich beispielsweise um solche handeln, die durch Umsetzung von 400 Gewichtsteilen Phosphorpentachlorid mit 130 Gewichtsteilen Ammoniumchlorid hergestellt worden sind (vgl. z.B. «Berichte der Deutschen Chemischen Gesellschaft», 57. Jahrgang, 1924, Seite 1345), oder um solche handeln, welche durch Umsetzung von 2 Mol Phosphorpentachlorid mit 1 Mol Ammoniumchlorid hergestellt worden sind (vgl. z.B. US 3 839 388, ausgegeben 1. Oktober 1974, S. Nitzsche et al., Wacker-Chemie GmbH). Bevorzugt sind Phosphornitridchloride der letzten Art.

Ob Organopolysiloxane, die durch Kondensation oder Äquilibrierung oder durch Kondensation und Äquilibrierung von Organosiliciumverbindungen, sie Si-gebundenen Sauerstoff enthalten, mit Phosphornitridchloriden erhalten worden sind, vor dem Stabilisieren tatsächlich Phosphornitridchloride oder zusätzlich zu Phosphornitridchloriden oder anstelle von Phosphornitridchloriden deren die Kondensation oder Äquilibrierung oder die Kondensation und Äquilibrierung fördernde Umsetzungsprodukte mit z.B. Organopolysiloxan enthalten, ist nicht geklärt. Folglich kann auch die Art dieser Umsetzungsprodukte nicht angegeben werden. Das Vorliegen solcher Umsetzungsprodukte in Organopolysiloxanen, die durch Kondensation oder Äquilibrierung oder Kondensation und Äquilibrierung von Organosiliciumverbindungen, die Si-gebundenen Sauerstoff enthalten, mit Phosphornitridchloriden erhalten worden sind, vor dem Stabilisieren dürfte aber auch nicht völlig ausgeschlossen werden können.

Die Herstellung von Phosphornitridchloride bzw. deren die Kondensation oder Äquilibrierung oder Kondensation und Äquilibrierung von organopolysiloxanen fördernde Umsetzungsprodukte enthaltenden und Äquilibrierung von Organopolysiloxanen fördernde Umsetzungsprodukte enthaltenden Organopolysiloxanen ist allgemein bekannt und beispielsweise in US 2 830 967, ausgegeben 15. April 1958, S. Nitzsche et al., Wacker-Chemie GmbH, US 2 990 419, ausgegeben 27. Juni 1961, S. Nitzsche et al., Wacker-Chemie GmbH, GB 10 49 188, ausgegeben 23. November 1966, Wacker-Chemie GmbH, US 3 186 967, ausgegeben 1. Juni 1965, S. Nitzsche et al., Wacker-Chemie GmbH, US 3 398 176, ausgegeben 20. August 1968, S. Nitzsche et al., Wacker-Chemie GmbH, US 3 706 775, ausgegeben 19. Dezember 1972, S. Nitzsche et al., Wacker-Chemie Gmbh, US 3 652 711, ausgegeben 28. März 1972, H. Triem et al., Wacker-Chemie GmbH, CA 809 229, ausgegeben 25. März 1969, Wacker-Chemie GmbH sowie US 3 839 388, ausgegeben 1. Oktober 1974, S. Nitzsche et al., Wacker-Chemie GmbH, eingehend beschrieben.

Im grössten Umfang und damit bevorzugt erfolgt zur Zeit die Herstellung von Phosphornitridchloride bzw. deren die Kondensation oder Äquilibrierung von Organopolysiloxanen fördernde Umsetzungsprodukte enthaltenden Organopolysiloxanen durch Kondensation bzw. Äquilibrierung und Kondensation von Organopolysiloxanen der allgemeinen Formel

$$HO(SiR_2O)_{m'}H,$$

wobei R die oben dafür angegebene Bedeutung hat und m' eine ganze Zahl im Wert von 1 bis 1000 ist, gegebenenfalls im Gemisch mit Triorganosiloxygruppen enthaltenden Organo(poly)siloxanen der allgemeinen Formel

$$R_3Si(OSiR_2)_{m'}R,$$

wobei R und m' jeweils die bereits dafür angegebene Bedeutung haben, oder anderen Triorganosiloxygruppen liefernden Organosiliciumverbindungen.

Bei der Herstellung von Phosphornitridchloride bzw. deren die Kondensation oder Äquilibrierung oder Kondensation und Äquilibrierung von Organopolysiloxanen fördernde Umsetzungsprodukte enthaltenden Organopolysiloxanen werden die Phosphornitridchloride im allgemeinen in Mengen von 0,001 bis 0,1 Gewichtsprozent, vorzugsweise 0,003 bis 0,05 Gewichtsprozent, jeweils bezogen auf das Gesamtgewicht der Organosiliciumverbindungen, deren Kondensation oder Äquilibrierung oder Kondensation und Äquilibrierung gefördert werden soll, eingesetzt.

Die anders als durch die Valenzen des Epoxysauerstoffs und durch die Valenzen, welche die beiden Kohlenstoffatome der Epoxygruppe direkt miteinander verbinden, abgesättigten Valenzen der beiden Kohlenstoffatome der Epoxygruppe

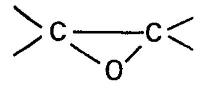

oder der Epoxygruppen in den erfindungsgemäss verwendeten, mindestens eine Epoxygruppe je Molekül enthaltenden Verbindungen können beliebig abgesättigt sein. Diese Valenzen können somit beispielsweise durch Wasserstoffatome, Alkyl-, Halogenalkyl-, Aryl-, Alkaryl-, Ether-, Hydroxyalkyl- oder Estergruppen, miteinander einen Ring bildende, zweiwertige Kohlenwasserstoffreste oder Silyl- oder Organosiloxangruppierungen enthaltende Reste abgesättigt sein. Es ist lediglich bevorzugt, bei der Ausübung des erfindungsgemässen Verfahrens als mindestens eine Epoxygruppe je Molekül enthaltende Verbindungen solche zu verwenden, die frei von aliphatischen Mehrfachbindungen und mit Chlorwasserstoff ein Salz bildenden Gruppen und bei mindestens einer Temperatur im Bereich von 5° C bis 30° C bei 1000 mbar (abs.) flüssig sind.

Beispiele für erfindungsgemäss verwendbare, mindestens eine Epoxygruppe je Molekül enthaltende Verbindungen sind Ethylenoxid, Epichlorhydrin (1-Chlor-2,3-epoxypropan), Diglycidylether, wie Bisphenol-A-diglycidylether, Glycidol, Phenylglycidylether (2,3-Epoxypropylpenylether), Cyclohexenoxid, Styroloxid, die Verbindung der Formel

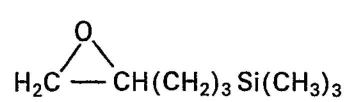

und durch Triorganosiloxygruppen endblockierte Mischpolymerisate aus Einheiten der Formel

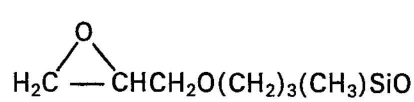

und Dimethylsiloxaneinheiten.

Vorzugsweise wird die mindestens eine Epoxygruppe je Molekül enthaltende Verbindung in Mengen von mindestens 2 Grammatom Sauerstoff, insbesondere 2 bis 20 Grammatom Sauerstoff in der Epopxygruppe oder den Epoxygruppen je Grammäquivalent $PNCl_2$ in den zur Herstellung der Organopolsiloxane eingesetzten Phosphornitridchloriden eingesetzt.

Zur besseren Verteilung und einfacheren Dosierung kann bei dem erfindungsgemässen Verfahren die mindestens eine Epoxygruppe je Molekül enthaltende Verbindung in Form einer Lösung in einem gegenüber derartigen Verbindungen inerten Verdünnungsmittel, wie durch Trimethylsiloxygruppen endblockiertem Dimethylpolysiloxan, oder einem gegenüber derartigen Verbindungen inerten Lösungsmittel, wie Benzol, Toluol oder Perchlorethylen eingesetzt werden.

Vorzugsweise wird das erfindungsgemässe Verfahren bei 0° C bis 200° C, insbesondere bei 70° C bis 180° C, durchgeführt. Das erfindungsgemässe Verfahren kann bei Druck der umgebenden Atmosphäre, also z.B. bei 1020 mbar (abs.), oder bei höheren oder niedrigeren Drücken durchgeführt werden. Das erfindungsgemässe Verfahren kann absatzweise, halbkontinuierlich oder vollkontinuierlich durchgeführt werden. Das erfindungsgemässe Verfahren kann absatzweise, halbkontinuierlich oder vollkontinuierlich durchgeführt werden. Um eine gute Verteilung der bei dem erfindungsgemässen Verfahren verwendeten Stoffe ineinander zu gewährleisten, wird das Gemisch aus Phosphornitridchloride bzw. deren die Kondensation oder Äquilibrierung oder die Kondensation und Äquilibrierung von Organopolysiloxanen fördernde Umsetzungsprodukte enthaltenden Organopolysiloxanen und erfindungsgemäss verwendeter, mindestens eine Epoxygruppe je Molekül enthaltende Verbindung vorzugsweise bewegt, beispielsweise in einem Planetenmischer, einem Doppelschneckenkneter oder einer Zahnradpumpe.

Die erfindungsgemäss stabilisierten Organopolysiloxane können für alle Zwecke verwendet werden, bei denen auch die nach den bisher bekannten Verfahren stabilisierten Organopolysiloxane eingesetzt werden konnten, z.B. als Fadengleitmittel oder zur Herstellung von Organopolysiloxanelastomeren.

Das in den folgenden Beispielen verwendete Phosphornitridchlorid wurde hergestellt wie folgt:

Ein Gemisch aus 417 g (2 Mol) Phosphorpentachlorid und 53,5 g (1 Mol) Ammoniumchlorid in 1000 ml Tetrachlorethan wird 12 Stunden mittels eines Ölbads mit einer Temperatur von 160° C zum Sieden unter Rückfluss erwärmt. Aus der so erhaltenen, hellgelben Lösung werden bei 160° C und unter Erniedrigung des Drucks bis auf etwa 1,33 mbar (abs.) die flüchtigen Anteile entfernt. Als Rückstand verbleiben gelbliche Kristalle, die im wesentlichen aus der Verbindung der Formel $Cl_3PNPCl_2NPCl_3 \cdot PCl_6$ bestehen.

Beispiel 1

a) In an sich bekannter Weise wird in einem Kneter ein Gemisch aus 4000 g eines in den endständigen Einheiten je eine Si-gebundene Hydroxylgruppe aufweisenden Dimethylpolysiloxans mit einer Viskosität von 130 mPa · s bei 25° C, 270 g eines durch Trimethylsiloxygruppen endblokkierten Dimethylpolysiloxans mit einer Viskosität von 100 mPa · s bei 25° C und 1 ml einer 10-gewichtsprozentigen Lösung des Phosphornitridchlorids in Methylenchlorid bei 5 mbar (abs.) so lange auf 80° C erwärmt, bis ein durch Trimethylsiloxygruppen endblockiertes Dimethylpolysiloxan mit einer Viskosität von etwa 100 000 mPa · s bei 25° C vorliegt.

b) In die gesamte Menge des so erhaltenen Organopolysiloxans werden bei 80° C und etwa 1020 mbar 0,5 g Phenylglycidylether eingeknetet.

Das so stabilisierte Organopolysiloxan ist klar und farblos. Innerhalb eines halben Jahres ist keine Änderung der Viskosität und des Aussehens dieses Organopolysiloxans festzustellen. Nach 16 Stunden Erwärmen auf 200° C ist das Organopolysiloxan noch klar und farblos.

Beispiel 2

a) In an sich bekannter Weise wird in einem Kneter ein Gemisch aus 4000 g eines in den endständigen Einheiten je eine Si-gebundene Hydroxylgruppe aufweisenden Dimethylpolysiloxans mit einer Viskosität von 250 mPa · s bei 25° C und 0,5 ml der 10-gewichtsprozentigen Lösung des Phosphornitridchlorids in Methylenchlorid bei 5 mbar (abs.) so lange auf 80° C erwärmt, bis ein Dimethylpolysiloxan mit einer Viskosität von 500 000 mPa · s bei 25° C vorliegt.

b) In die gesamte Menge des so erhaltenen Organopolysiloxans werden bei 80° C und etwa 1020 mbar 0,2 g Epichlorhydrin eingeknetet.

Das so stabilisierte Organopolysiloxan ist klar und farblos. Innerhalb eines halben Jahres ist keine Änderung der Viskosität und des Aussehens dieses Organopolysiloxans festzustellen. Nach 16 Stunden Erwärmen auf 200° C ist das Organopolysiloxan noch klar und farblos.

Beispiel 3

In einen Doppelschneckenkneter mit einer bei 150° C und 5 mbar (abs.) betriebenen, 4 m langen Reaktionszone werden kontinuierlich 100 l je Stunde eines in den endständigen Einheiten je eine Si-gebundene Hydroxylgruppe aufweisenden Dimethylpolysiloxans mit einer Viskosität von 120 mPa · s bei 25° C, 7,2 l je Stunde eines durch Trimethylsiloxygruppen endblockierten Dimethylpolysiloxans mit einer Viskosität von 63 mPa · s bei 25° C und 200 ml je Stunde einer 1-gewichtsprozentigen Lösung des Phosphornitridchlorids eingespeist. Am Austragsrohr wird mittels einer Zahnradpumpe das so erhaltene hochviskose, durch Trimethylsiloxygruppen endblockierte Dimethylpolysiloxan, das noch eine Temperatur von 150° C aufweist, mit 200 ml je Stunde eines durch Trimethylsiloxygruppen endblockierten Mischpolymerisates aus 10 Molprozent Einheiten der Formel

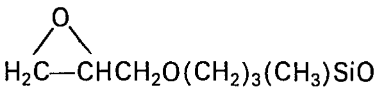

und 90 Molprozent Dimethylsiloxaneinheiten mit einer Viskosität von 110 mPa · s bei 25° C vermischt.

Das so stabilisierte Organopolysiloxan mit einer Viskosität von 33 000 mPa · s bei 25° C ist klar und farblos. Innerhalb eines halben Jahres ist keine Änderung der Viskosität und des Aussehens dieses Organopolysiloxans festzustellen. Nach 16 Stunden Erwärmen auf 200° C ist das organopolysiloxan noch klar und farblos.

Vergleichsversuch a)

Die in Beispiel 1 beschriebene Arbeitsweise wird wiederholt mit der Abänderung, das anstelle der 0,5 g Phenylglycidylether 0,5 g 1,1,3,3-Tetramethylbutylamin verwendet werden.

Das so stabilisierte Organopolysiloxan ist klar und farblos. Innerhalb eines halben Jahres ist keine Änderung der Viskosität des Organopolysiloxans festzustellen. Innerhalb von bereits 6 Wochen ist jedoch die Fällung eines festen Stoffes in dem Organopolysiloxan festzustellen.

Vergleichsversuch b)

Die in Beispiel 2 beschriebene Arbeitsweise wird wiederholt mit der Abänderung, das anstelle der 0,2 g Epichlorhydrin 0,5 g Triisononylamin verwendet werden.

Vergleichsversuch c)

Die in Beispiel 3 beschriebene Arbeitsweise wird wiederholt mit der Abänderung, dass anstelle der Verwendung des Epoxygruppen aufweisenden Organopolysiloxans 2 l/S Stunde gasförmiger Ammoniak am Austragsrohr mittels der Zahnradpumpe ind das Organopolysiloxan eingemischt werden.

In jeweils 100 ml der gemäss den Beispielen 1, 2 und 3 sowie Vergleichsversuch a), b) und c) stabilisierten Organopolysiloxane werden Stücke von unter Ausscheidung von Graphit erstarrtem Gusseisen (sogenanter «Grauguss») in offenen Bechergläsern 2 Monate bei Raumtemperatur liegen gelassen. Danach sind die Gusseisenstücke in den gemäss den Beispielen 1, 2 und 3 stabilisierten Organopolysiloxanen unverändert, während die Gusseisenstücke in den gemäss den Vergleichsversuchen a), b) und c) stabilisierten Organopolysiloxanen jeweils optisch deutliche Oberflächenkorrosion zeigen.

## Patentansprüche

1. Verfahren zum Stabilisieren von vor dem Stabilisieren Phosphornitridchloride bzw. deren die Kondensation oder Äquilibrierung oder die Kondensation und Äquilibrierung von Organopolysiloxanen fördernde Umsetzungsprodukte enthaltenden Organopolysiloxanen gegenüber Viskositätsänderungen durch Umsetzung der genannten Phosphorverbindungen mit anderen Verbindungen, dadurch gekennzeichnet, dass die genannten Phosphorverbindungen mit mindestens einer mindestens eine Epoxygruppe je Molekül enthaltenden Verbindung umgesetzt werden.

2. Verfahren nach Anspruch 1, dadurch gekennzeichnet, dass mindestens eine Epoxygruppe je Molekül enthaltende Verbindung in Mengen von mindestens 2 Grammatom Sauerstoff in der Epoxygruppe oder den Epoxygruppen je Grammäquivalent $PNCl_2$ in den zur Herstellung der Organopolysiloxane eingesetzten Phosphornitridchloriden eingesetzt wird.

## Revendication

1. Procédé pour stabiliser contre des variations de viscosité des polyorganosiloxanes contenant, avant la stabilisation, des chlorures de phosphonitriles ou des produits de réaction de ceux-ci qui accélèrent la condensation ou l'équilibrage, ou la condensation et l'équilibrage, de polyorganosiloxanes, par réaction des composés phosphorés cités avec d'autres composés, procédé caractérisé en ce qu'on fait réagir les composés phosphorés cités avec au moins un composé contenant au moins un radical époxy par molécule.

2. Procédé selon la revendication 1, caractérisé en ce que le composé contenant au moins un radical époxy par molécule est mis en jeu en une quantité correspondant à au moins 2 atomes-grammes d'oxygène du radical époxy ou des radicaux époxy par équivalent-gramme de $PNCl_2$ contenu dans les chlorures de phosphonitriles utilisés pour la préparation des polyorganosiloxanes.

## Claims

1. Process for the stabilisation against viscosity changes of organopolysiloxanes which, before being stabilised, contain phosphorus nitride chloride or contain a reaction product thereof which promotes the condensation or equilibration, or the condensation and equilibration, of organopolysiloxanses, by reacting the said phosphorus compound with another compound, characterised in that the said phosphorus compound is reacted with at least one compound containing at least one epoxy group per molecule.

2. Process according to claim 1, characterised in that the compound containing at least one epoxy group per molecule is used in amounts of at least 2 gram-atoms of oxygen in the epoxy group or the epoxy groups per gram equivalen of $PNCl_2$ in the phosphorus nitride chloride used in the manufacture of the organopolysiloxanes.